# EUROPEAN PATENT APPLICATION

(11) **EP 4 276 042 A1**
(43) Date of publication of application: **15.11.2023**
(21) Application number: 23168113.1
(22) Date of filing: 14.04.2023
(51) Int. Cl.: B65G 57/00, B65G 59/00, B65G 60/00, H01M 10/04, B65G 47/90

(54) **BATTERY PLATE ALIGNMENT SYSTEM AND METHOD**

(30) Priority: 12.05.2022 GB 202206971
(71) Applicant: TBS Engineering Limited, Brockworth, Gloucester GL3 4AQ (GB)
(72) Inventor: Cox, David, Gloucester (GB)
(74) Representative: Wynne-Jones IP Limited

(57) **Abstract**

A battery plate alignment system includes a stack aligner. The stack aligner comprises a head frame located above a stack support surface; a pair of clamping members mounted on the head frame so as to project below the head frame, wherein each clamping member is mounted on an actuator arranged to move the clamping member along the head frame; a rotary drive system arranged to rotate the head frame through at least 180° about a vertical axis; and a vertical drive system arranged to move the head frame vertically with respect to the support surface. A method of aligning the stack comprises positioning the stack to one side of the support surface; lowering the head frame over the stack; clamping the stack to the head frame; lifting the stack from the support surface; rotating the head frame around the vertical axis; moving the stack along the head frame so that the stack is over its original position; lowering the stack back onto the support surface; and unclamping the stack.

## Description

### Field

This invention relates to systems and methods for aligning stacks of battery plates for further processing when manufacturing batteries.

### Background

In the manufacture of multi-plate batteries, stacks of battery plates are prepared which are assembled into the final battery structure. The stack comprise the battery plates separated by a paper of fabric layer. The individual plates in the stack can become misaligned and stuck to each other so that they are not in a suitable position for incorporation into a battery. Therefore, it is necessary to separate the plates and realign them into a stack. This process is known as shuffling. Stacks of plates are loaded either manually or automatically not a conveyor, which moves the stacks to a shuffler where each stack is shuffled before being returned to eth conveyor and passed into the manufacturing process.

GB2577119 and WO2017098240 described systems and processes used in this procedure.

The battery plates have a lug that is usually positioned towards on end of an edge of the plate. These lugs are aligned in a stack of plates. The battery manufacturing process required that all of the stacks are provide in the same orientation, with the lugs in the same position in each stack. Previously, it has been necessary to ensure that the stacks are placed on the conveyor in the correct orientation to avoid problems later on in the process. This provides extra burden on the operator or system loaded stacks onto the conveyor which can slow down operation. If a stack is loaded incorrectly, it can be necessary to stop the process to correct this. This invention aims to address these problems.

### Summary

A first aspect of the invention comprises a battery plate alignment system comprising a battery plate stack aligner for use with a battery plate stack shuffler comprising a horizontal support surface for a stack of battery plates, the stack aligner comprising: an elongate head frame located above the support surface; a pair of clamping members mounted on the head frame so as to project below the head frame and define opposed clamping surfaces, wherein each clamping member is mounted on an actuator arranged to move the respective clamping member along the head frame; a rotary drive system arranged to rotate the head frame through at least 180° about a vertical axis extending through the plane of the support surface; and a vertical drive system arranged to move the head frame vertically with respect to the support surface; wherein, in use, the stack aligner is configured to: lower the head frame towards the support surface with the clamping members spaced apart so that the clamping members are positioned on either side of a stack of battery plates positioned to one side of the shuffler support surface; operate the actuators move the clamping members to clamp the stack between the clamping surfaces; operate the vertical drive system to lift the clamped stack from the shuffler support surface; operate the rotary drive system to rotate the head frame around the vertical axis in a first direction by 180°; operate the actuators to move the clamped stack along the head frame so that the clamped stack is over its original position; operate the vertical drive system to lower the clamped stack back onto the shuffler support surface; and operate the actuators to unclamp the stack.

By lifting the clamped stack, rotating the head frame, and moving the clamped stack back along the head frame, the stack can be returned to its original position but in a reversed orientation around a vertical axis.

The stack aligner can be configured to rotate the head frame around the vertical axis in a second, opposite direction by 180° after the actuators unclamp the stack. This can return the head frame to its original position ready for operation with another stack.

The system can comprise a position sensor for sensing the orientation of the stack of battery plates to initiate operation of the stack aligner. The position sensor can comprise a light sensor positioned such that lugs on a stack of battery plates will interrupt a light beam when the stack of plates needs to be aligned. The position sensor can be located on a delivery conveyor for providing stacks of battery plates to the battery plate shuffler. In this way, stacks that are correctly oriented will not trigger the system for realignment and can proceed directly to shuffling.

The actuators, the rotary drive system, and/or the vertical drive system can be pneumatically operated.

The battery plate shuffler can comprise a support surface for a stack of battery plates; and a series of opposed blocks spaced on opposite sides of the support surface and moveable to engage a stack of battery plates between the opposed blocks to shuffle the plates in the stack; wherein the direction of movement of the opposed blocks is at right angles to the direction of movement of the clamping members for clamping or unclamping the stack on the support surface. This results in the clamping members acting on different sides of the stack to the opposed blocks. For example, the clamping members act on the faces of the stacked plats, whereas the opposed blocks act on the edges of the stacked plates. This avoids interference with the shuffling process.

The system can further comprise a conveyor arranged to transport stacks of battery plates to the shuffler, wherein the conveyor has a transport surface that is parallel to and below the support surface of the shuffler and can further comprise an elevator to raise a stack of plates from the transport surface of the conveyor for positioning on the shuffler support surface.

The support surface can be moveable between a first position in which the support surface is horizontal and located below the stack aligner and opposed blocks, and a second position in which the support surface is vertical adjacent a side of the conveyor.

The system can further comprise a pair of clamp supports on opposite sides of the support surface, wherein the clamp supports are configured to extend below a lower surface and above an upper surface of a stack on the conveyor. The clamp supports can be configured to move away from the stack when the stack is clamped by the clamping members of the stack aligner.

The support surface can moveable between the first and second positions by rotation about an axis parallel to the direction of travel of the conveyor. This allows the stack to be picked up and returned to the conveyor by simple rotation of the support surface without affecting other parts of the system.

A second aspect of the invention comprises a method of aligning battery plates in a stack, comprising: positioning a stack of battery plates to one side of a horizontal shuffler support surface; lowering a head frame over the stack; clamping the stack to the head frame; lifting the clamped stack from the shuffler support surface; rotating the head frame around the vertical axis in a first direction by 180°; moving the clamped stack along the head frame so that the clamped stack is over its original position; lowering the clamped stack back onto the shuffler support surface; and unclamping the stack. The method can further comprise rotating the head frame around the vertical axis in a second, opposite direction by 180° after unclamping the stack.

The method can further comprise sensing the orientation of the stack of battery plates to initiate operation of the head frame, for example sensing the orientation of the stack while the stack is located on a delivery conveyor.

The method can further comprise transporting stacks of battery plates on a conveyor that has a transport surface that is parallel to and below the shuffler support surface.

The method can further comprise raising a stack of plates from the transport surface of the conveyor for positioning on the shuffler support surface.

The method can further comprise moving the support surface between a first position in which the support surface is horizontal and located below the head frame, and a second position in which the support surface is vertical adjacent a side of the conveyor, for example by rotation about an axis parallel to the direction of travel of the conveyor.

The method can comprise extending a pair of clamp supports on opposite sides of the support surface below a lower surface and above an upper surface of a stack on the conveyor, and further comprise moving the clamp supports away from the stack when the stack is clamped by the head frame.

The method of the second aspect can be performed using a system according to the first aspect.

### Drawings

Figure 1 shows a battery plate aligning system.
Figure 2 shows part of the system of Figure 1 with a stack of plates to be aligned.
Figure 3 shows the part of the system of Figure 2 with the stack of plates being removed from a conveyor.
Figures 4 to 11 show parts of the system of Figure 1 at different stages of alignment.
Figure 12 shows part of the system of Figure 1 with the stack of plates returned to the conveyor.
Figures 13 to 17 show a side view of the stack aligner at different stages of the alignment operation.

### Description

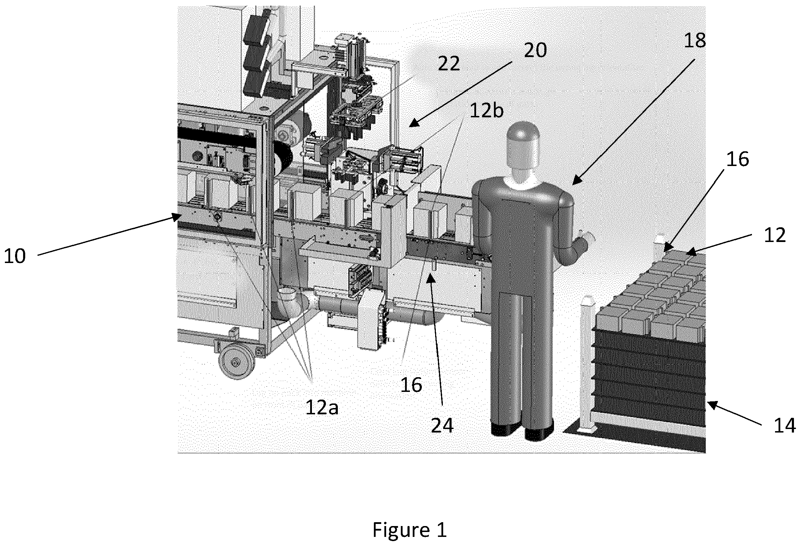

The battery plate aligning system shown generally in Figure 1 comprises a conveyor 10 for transporting stacks 12 of battery plates from a delivery pallet 14 to a battery manufacturing system (not shown).

The stacks 12 of battery plates comprise a given number of individual battery plates separated by wrappers. Each plate has a lug 16 positioned towards one end of one edge and all the plates in a given stack 12 have their lugs 16 aligned.

The stacks 12 are loaded onto the conveyor 10 by an operator 18 or by an automated handling system (not shown). The stacks 12 are placed on the conveyor 10 so that the lugs16 all project towards the same side. However, depending on how the stacks 16 are presented in the pallet 14 or manipulated by the operator 18 or handling system when placing them on the conveyor 10, the lugs 16 may be on the left- or right-hand side of a stack 12. While the desired orientation of the stacks 12 might be with the lugs 16 to the left for proper assembly of the battery (see stacks 12a), some stacks might be loaded onto the conveyor 10 with the lugs 16 on the right-hand side (see stacks 12b).

Before each stack 12 is passed on to the battery manufacturing system, it is shuffled in a shuffler 20. The shuffler acts to shear each stack 12 in the planes of the plates so that the plates in the stack 12 are separated from each other and then realigned to deal with any plate alignment problems that might have arisen during assembly or handling of the stacks up to this point. Operation of the shuffler 20 will be described in more detail below.

In order to deal with the problem of incorrect stack orientation, the shuffler includes a stack aligner 22 (described in more detail below) which, when a stack with incorrect orientation 12b is detected, operates to correct the alignment of the stack 12b before it is shuffled.

In order to detect incorrect orientation of a stack 12b, the conveyor 10 has a light beam sensor 24 which is arranged so that when the lugs 16 of a stack 12b are in the wrong position, the light beam is broken, and the alignment head 22 activated.

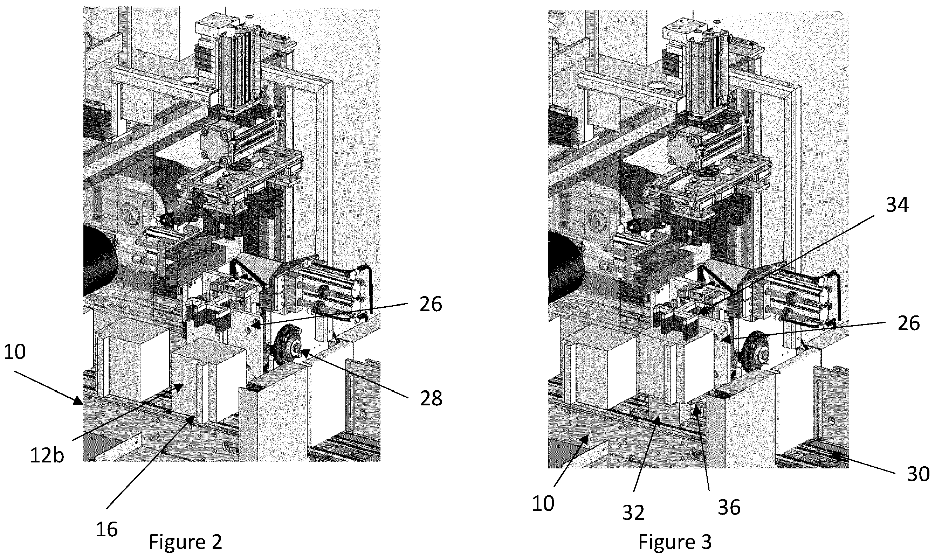

Figures 2 to 4 illustrate operation of the system to place the stack 12 onto the shuffler 20. This operation will be the same irrespective of the orientation of the stack 12, but these figures show the stack with the lug 16 in the wrong position.

The shuffler 20 includes a support surface 26. In order to pick up a stack 12, the support surface 26 is rotated about an axis 28 running parallel to the transport surface 30 of the conveyor 10 until the support surface 26 is approximately vertical and positioned close to one side of the conveyor 10. In operation, the conveyor 10 will stop when a stack 12 is adjacent the support surface 26 (Figure 2). At this point, an elevator 32 rises through the conveyor 10 to lift the stack 12 from the transport surface 30 until it engages a first clamp support 34 connected to the support surface 26. A second clamp support 36 extends from the support surface 26 below the stack 12 so that the stack is clamped between the first and second clamp supports 34, 36 (Figure 3).

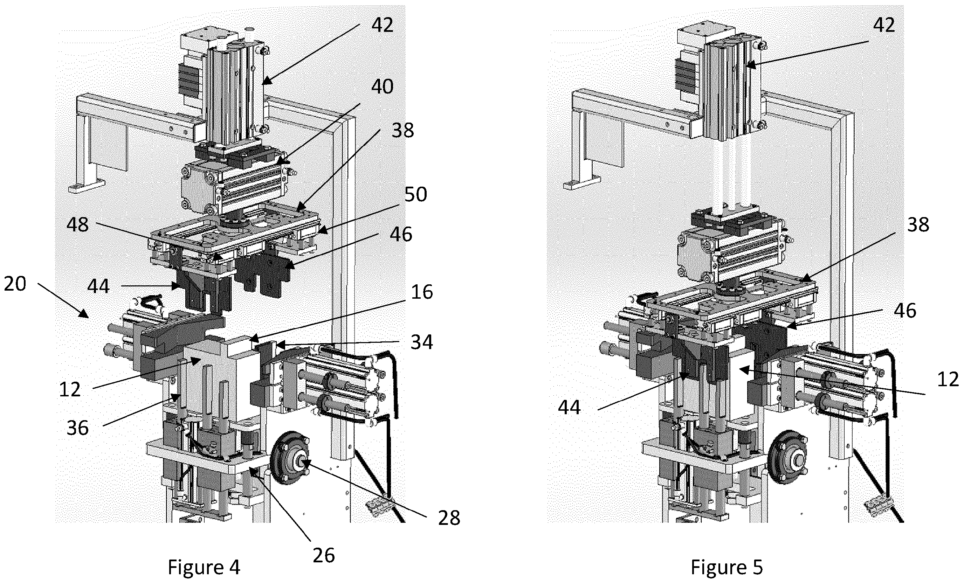

Once the stack 12 is clamped between the clamp supports 34, 36, the support surface 26 is rotated 90° around the axis 28 so that the surface 26 is approximately horizontal (Figure 4) and the stack 12 is positioned to one side of the surface with the lugs 16 towards the right-hand side of the upper edge. Because the light beam sensor 24 has detected that this is an incorrect orientation, operation of the stack aligner 22 is initiated.

The stack aligner 22 comprises an elongate head frame 38 positioned above the support surface 26. The head frame 38 is connected to a rotary drive 40 which is posited to rotate about a vertical axis extending through the plane of the support surface 26 when in the horizontal position. The rotary drive 40 is pneumatically operated and can rotate the head frame 180° in either direction. The head frame 38 is initially aligned with the stack 12.

The rotary drive 40 is mounted on a pneumatically operated vertical drive system 42 and which can operate to raise or lower the head frame 38.

First and second clamping members 44, 46 are mounted on respective first and second pneumatic actuators 48, 50 on the head frame 38. The clamping members 44, 46 extend below the head frame 38 and define first and second opposed clamping surfaces 52, 54. The actuators 48, 50 are arranged to move the clamping members 44, 46 toward or away from each other or to move both clamping members 44, 46 in the same direction.

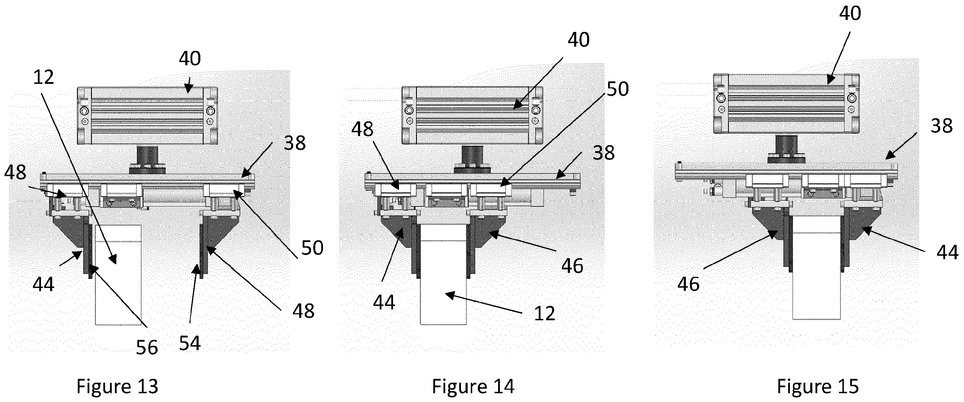

At the beginning of operation, the clamping members 44, 46 are spaced apart and positioned toward opposite ends of the head frame 38. The vertical drive system operates to lower the head frame 38 over the stack 12 until the upper part of the stack 12 is positioned between the clamping members 44, 46 (Figure 5, Figure 13). At this point, the first clamping member 44 is spaced from the stack 12 by a small distance.

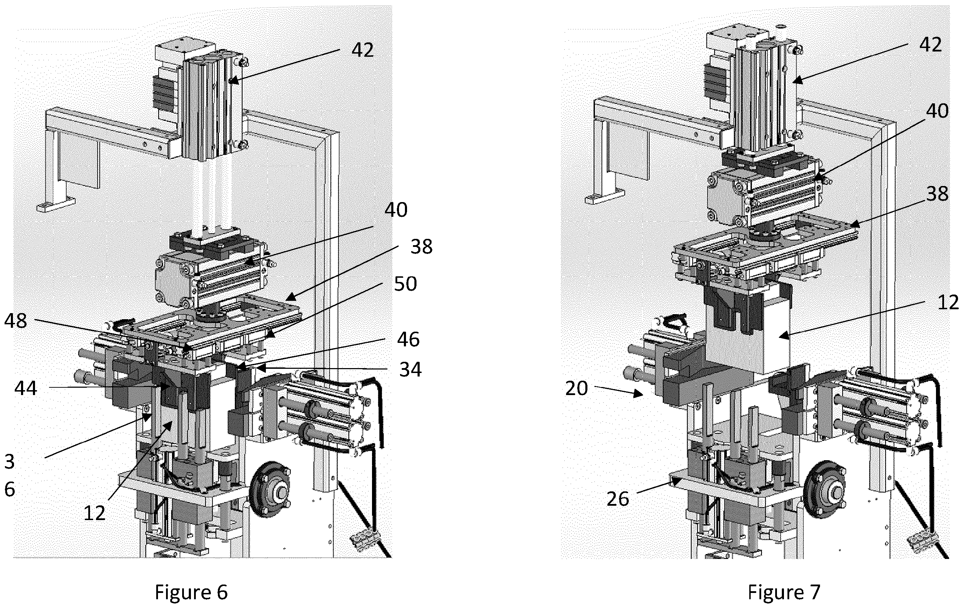

The actuators 48, 50 operate to bring the clamping members 44, 46 together. The first clamping member will move until it contacts the stack 12 but does not move the stack 12. The second clamping member 46 will move into contact with the opposite side of the stack 12 and apply sufficient force to clamp the stack against the first clamping member 44 (Figure 6, Figure 14). The clamping members 44, 46 are shaped so that they do not engage the clamp supports 34, 36 when clamped on the stack 12. The first clamp support 34 then moves away from the stack 12.

The vertical drive system 42 then operates to lift the clamped stack 12 from the support surface 26 so that the lower part of the stack 12 is above the components of the shuffler 20 adjacent the support surface 26 (Figure 7).

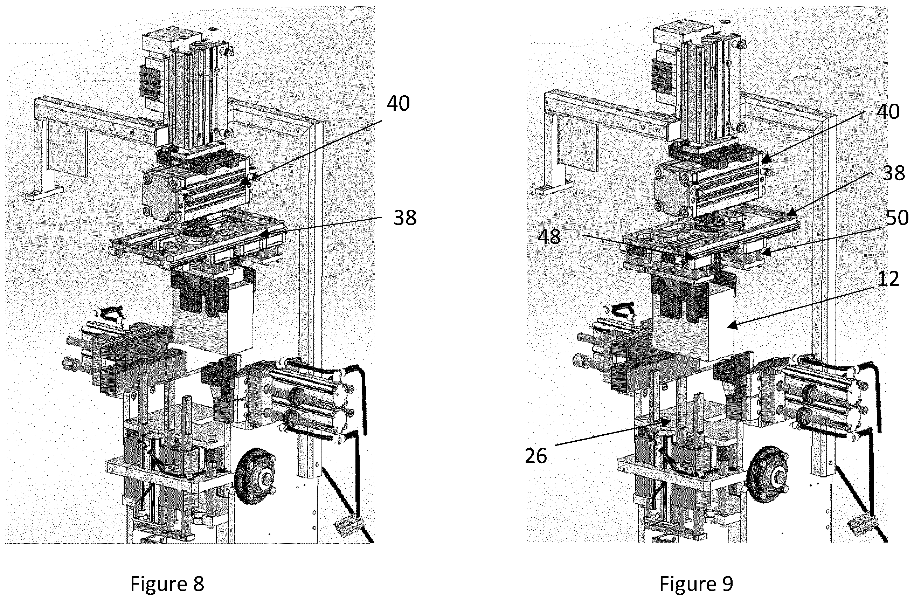

The rotary drive 40 rotates the head frame 38 through 180° (Figure 8, Figure 15).

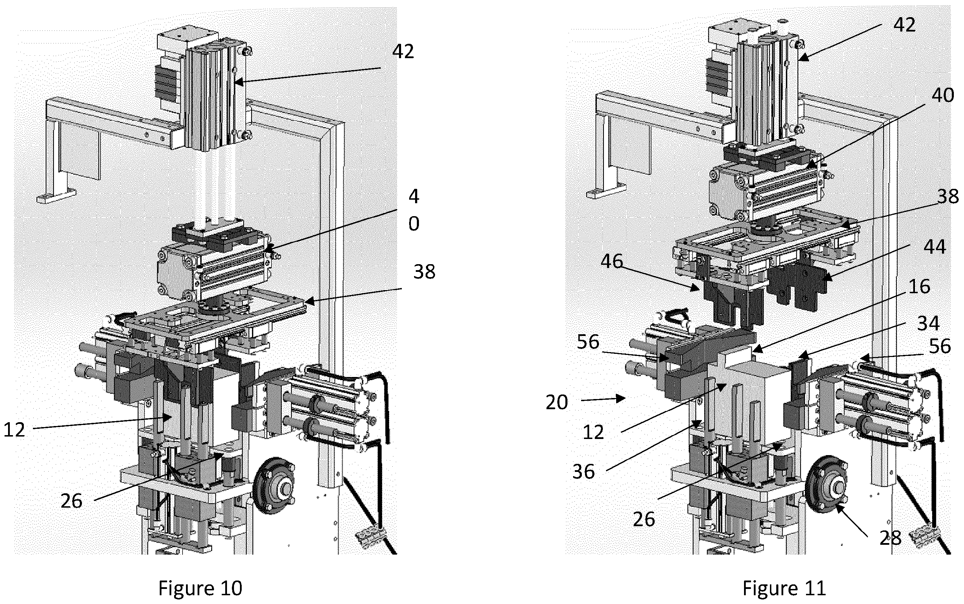

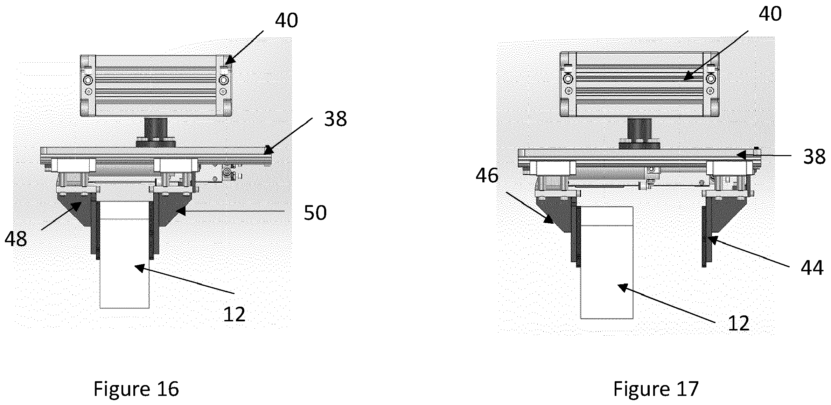

The actuators 48, 50 then operate in the same direction to translate the position of the stack 12 over the support surface 26 so that it is located above its original position on the support surface 26 (Figure 9, Figure 16). At this point, the vertical drive system 42 operates to lower the stack 12 back onto the support surface 26 (Figure 10).

Once the stack 12 is on the support surface 26, and first clamping member 44 moves back along the head frame 38 to release the stack 12 (Figure 17), and the vertical drive system 42 operates to raise the had frame 38 so that the clamping members 44, 46 are lifted away from the stack 12 (Figure 11). The result of this set of operations is that the stack 12 is returned to its original position on the support surface 26 but it has been rotated through 180° about the vertical so that the lugs 16 are now near to the left-hand edge of the stack 12, i.e. the correct orientation. The rotary drive 40 operates to rotate the head frame through 180° in a reverse direction so that it returns to its original position as shown in Figure 4 and the clamping members 44, 46 return to their starting positions.

The shuffler 20 comprises pairs of pneumatically operated, opposed blocks 56 having complementary concave and convex surfaces or parallel surfaces. By applying the concave and convex or parallel block sequentially to the stack 12, the individual plates of the stack 12 are sheared and separated, and then realigned (i.e shuffled).

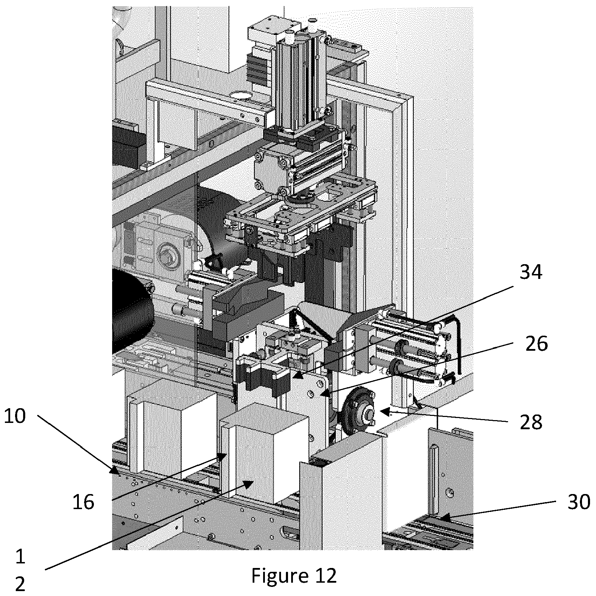

Once the stack 12 has been shuffled, the first clamp support 34 moves to contact the stack 12, and then the support surface 26 rotates about the axis 28 through 90° to return the stack to the elevator 32. The second clamp support 36 then withdraws and the elevator lowers the stack 12 back onto the conveyor transport surface 30 (Figure 12) which moves the stack 12 along the processing path. The lugs 16 are now on the left-hand side of the stack 12, which is correct for further processing.

Various changes can be made within the scope o the invention. For example. While various actuators and systems have been described as pneumatically operated, other forms of drive can be sued, such as hydraulic, electric, mechanical, and various combinations of these, according to requirements.

## Claims

1. A battery plate alignment system comprising a battery plate stack aligner for use with a battery plate stack shuffler comprising a horizontal support surface for a stack of battery plates, the stack aligner comprising:
an elongate head frame located above the support surface;
a pair of clamping members mounted on the head frame so as to project below the head frame and define opposed clamping surfaces, wherein each clamping member is mounted on an actuator arranged to move the respective clamping member along the head frame;
a rotary drive system arranged to rotate the head frame through at least 180° about a vertical axis extending through the plane of the horizontal support surface; and
a vertical drive system arranged to move the head frame vertically with respect to
the support surface;
wherein, in use, the stack aligner is configured to:
lower the head frame towards the support surface with the clamping members spaced apart so that the clamping members are positioned on either side of a stack of battery plates positioned to one side of the shuffler support surface;
operate the actuators move the clamping members to clamp the stack between the clamping surfaces;
operate the vertical drive system to lift the clamped stack from the shuffler support surface;
operate the rotary drive system to rotate the head frame around the vertical axis in a first direction by 180°;
operate the actuators to move the clamped stack along the head frame so that the clamped stack is over its original position;
operate the vertical drive system to lower the clamped stack back onto the shuffler support surface; and
operate the actuators to unclamp the stack.

2. A battery plate alignment system as claimed in claim 1, wherein, in use, the stack aligner is configured to rotate the head frame around the vertical axis in a second, opposite direction by 180° after the actuators unclamp the stack.

3. A battery plate alignment system as claimed in claim 1 or 2, further comprising a position sensor for sensing the orientation of the stack of battery plates to initiate operation of the stack aligner; and optionally wherein the position sensor comprises a light sensor positioned such that lugs on a stack of battery plates will interrupt a light beam when the stack of plates needs to be aligned.

4. A battery plate alignment system as claimed in claim 3, wherein the position sensor is located on a delivery conveyor for providing stacks of battery plates to the battery plate shuffler.

5. A battery plate alignment system as claimed in any preceding claim, wherein the actuators, the rotary drive system, and/or the vertical drive system are pneumatically operated.

6. A battery plate alignment system as claimed in any preceding claim, wherein the battery plate shuffler, comprises:
a support surface for a stack of battery plates; and
a series of opposed blocks spaced on opposite sides of the support surface and
moveable to engage a stack of battery plates between the opposed blocks to
shuffle the plates in the stack;
wherein the direction of movement of the opposed blocks is at right angles to the direction of movement of the clamping members for clamping or unclamping the stack on the support surface.

7. A battery plate alignment system as claimed in claim 6, further comprising a conveyor arranged to transport stacks of battery plates to the shuffler, wherein the conveyor has a transport surface that is parallel to and below the support surface of the shuffler; and optionally further comprising an elevator to raise a stack of plates from the transport surface of the conveyor for positioning on the shuffler support surface.

8. A battery plate alignment system as claimed in claim 7, wherein the support surface is moveable between a first position in which the support surface is horizontal and located below the stack aligner and opposed blocks, and a second position in which the support surface is vertical adjacent a side of the conveyor; and optionally further comprising a pair of clamp supports on opposite sides of the support surface, wherein the clamp supports are configured to extend below a lower surface and above an upper surface of a stack on the conveyor, and wherein the clamp supports are optionally configured to move away from the stack when the stack is clamped by the clamping members of the stack aligner.

9. A battery plate alignment system as claimed in claim 8, wherein the support surface is moveable between the first and second positions by rotation about an axis parallel to the direction of travel of the conveyor.

10. A method of aligning battery plates in a stack, comprising:
positioning a stack of battery plates to one side of a horizontal shuffler support surface;
lowering a head frame over the stack;
clamping the stack to the head frame;
lifting the clamped stack from the shuffler support surface;
rotating the head frame around vertical axis extending through the plane of the horizontal shuffler support surface in a first direction by 180°;
moving the clamped stack along the head frame so that the clamped stack is over its original position;
lowering the clamped stack back onto the shuffler support surface; and
unclamping the stack.

11. A method as claimed in claim 10, further comprising rotating the head frame around the vertical axis in a second, opposite direction by 180° after unclamping the stack.

12. A method as claimed in claim 10 or 11, further comprising sensing the orientation of the stack of battery plates to initiate operation of the head frame, optionally while the stack is located on a delivery conveyor.

13. A method as claimed in any of claims 10 to 12, further comprising transporting stacks of battery plates on a conveyor that has a transport surface that is parallel to and below the shuffler support surface; and optionally further comprising raising a stack of plates from the transport surface of the conveyor for positioning on the shuffler support surface.

14. A method as claimed in claim 13, comprising moving the support surface between a first position in which the support surface is horizontal and located below the head frame, and a second position in which the support surface is vertical adjacent a side of the conveyor; and optionally comprising moving the support surface between the first and second positions by rotation about an axis parallel to the direction of travel of the conveyor.

15. A method as claimed in claim 14, further comprising extending a pair of clamp supports on opposite sides of the support surface below a lower surface and above an upper surface of a stack on the conveyor; and optionally further comprising moving the clamp supports away from the stack when the stack is clamped by the head frame.
